(19) Europäisches Patentamt
European Patent Office
Office européen des brevets

(11) **EP 2 478 990 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(51) Int Cl.:
***B23K 26/00*** *(2014.01)*     ***B23K 26/073*** *(2006.01)*
***B23K 26/067*** *(2006.01)*     ***B23K 26/06*** *(2014.01)*

(21) Anmeldenummer: **11000485.0**

(22) Anmeldetag: **21.01.2011**

(54) **Verfahren zum Einstellen eines Laserlichtspots zur Laserbearbeitung von Werkstücken sowie Laseranordnung zur Durchführung des Verfahrens**

Method for adjusting a laser light spot for laser processing of workpieces and laser assembly for carrying out the method

Procédé de réglage d'un spot de lumière laser pour le traitement laser de pièces  et dispositif destiné à l'exécution du procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.07.2012 Patentblatt 2012/30**

(73) Patentinhaber: **Leister Technologies AG 6056 Kägiswil (CH)**

(72) Erfinder:
• **Vogler, Daniel 6005 Luzern (CH)**

• **Raab, Christoph 6005 Luzern (CH)**
• **Gubler, Ulrich 6343 Rotkreuz (CH)**

(74) Vertreter: **Klocke, Peter ABACUS Patentanwälte Lise-Meitner-Strasse 21 72202 Nagold (DE)**

(56) Entgegenhaltungen:
**DE-A1-102007 037 133    US-A1- 2003 098 295 US-A1- 2005 070 035    US-A1- 2007 145 024**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 478 990 B1

## Beschreibung

Die Erfindung betrifft ein Verfahren zum Einstellen eines Laserlichtspots hoher Intensität zur Laserbearbeitung von Werkstücken, vorzugsweise zum Laserkunststoffschweißen von zu verbindenden Werkstücken, mittels einer Laseranordnung sowie eine Laseranordnung zur Durchführung des Verfahrens. Dabei weist die Laseranordnung einen einen Laserstrahl aussendenden Laser und mindestens eine Fokussierungslinse zum Konvergieren des Laserstrahls auf sowie ein optisches Wirkelement zur Einstellung des Strahlendurchmessers des Laserstrahls, wobei das optische Wirkelement als diffraktives optisches Element ausgebildet ist, das den ursprünglichen Laserstrahl in ein Strahlenbündel aus Teillaserstrahlen zerlegt, die auf die Werkstücke gerichtet sind.

Bei der Laserbearbeitung von Werkstücken ist es üblich, vom Laser ausgesandte unfokussierte Laserstrahlung, die typischerweise kollimiert ist, durch eine Fokussierungsoptik auf einen kleineren Strahlquerschnitt zu fokussieren und den fokussierten Laserstrahl auf die Materialoberfläche der zu bearbeitenden Werkstücke zu richten. Dabei kann die Strahlachse des fokussierten Laserstrahls relativ zu dem Material der Werkstücke ruhend sein oder entlang einer Bearbeitungsbahn bewegt werden. Gleichzeitig wird die aus der Fokussierung bestimmt, im Bereich einer Wechselwirkungsfläche der Werkstücke gehalten, die die Laserstrahlung zumindest teilweise absorbiert. Die für die Materialbearbeitung eingesetzte Laserstrahlung kann aus einem oder mehreren Strahlen bestehen, die mit einer oder mehreren Strahlungsquellen erzeugt werden. Lasermaterialbearbeitungsverfahren, bei denen die fokussierte Laserstrahlung in das Material der zu bearbeitenden Werkstücke eindringt, sind zum Beispiel das Bohren, Abtragen, Schneiden oder Schweißen.

Bei der Bearbeitung und dem Verbinden von Werkstücken mittels Laserstrahlung spielen die Größe und die Form des auf die Werkstücke fokussierten Laserstrahls eine wichtige Rolle. Hierbei kommt es insbesondere auf eine richtig eingestellte Leistungsdichteverteilung innerhalb des erzeugten Laserlichtspots hoher Intensität an. Laserquellen weisen in der Regel ein rundes gaussförmiges Strahlenprofil auf, das durch geeignete Maßnahmen auf die gewünschte Größe und die benötigte Form transformiert werden muss. In diesem Zusammenhang ist die Verwendung von diffraktiven optischen Elementen (DOEs) zur Strahlformung speziell für das Laserkunststoffschweißen und das Laserlöten aus einigen Patentdokumenten bekannt. Zum Stand der Technik wird auf die Druckschriften US 2003/098 295 A1, US 7,009,138 B2, EP 1 449 610 A1, EP 1 524 096 A3, EP 0 184 290 A1 und WO 2009/045 320 A verwiesen. Die im Stand der Technik zitierten Dokumente bezwecken alle den vom Laser ausgehenden Laserstrahl mittels einem DOE in Teilstrahlen zu teilen, um unterschiedliche Bearbeitungsstellen separat voneinander zu erreichen und an den entsprechenden Bearbeitungspunkten simultan oder quasisimultan auf die Werkstücke einzuwirken. Die Wirkungsweise und der Aufbau von gebräuchlichen diffraktiven optischen Elementen ist dem Fachmann bekannt, so dass diese in diesem Rahmen nicht erläutert werden müssen.

Zum Stand der Technik wird weiterhin auf die Schrift DE 10 2007 037 133 A1 verwiesen. Diese offenbart ein Verfahren und eine Vorrichtung zur gleichzeitigen Erzeugung einer Mehrzahl von Material-Schwächungsbereichen oder Perforierungen in einem Substrat. Bei dem Verfahren wird ein Laserlichtstrahl von einer Abbildungsoptik durch Lichtbeugung in eine Mehrzahl von Teillichtstrahlen geteilt und abgebildet, wobei eine Mehrzahl von diskreten Lichtflecken ausgebildet wird, die auf dem bzw. in dem Substrat die Ausbildung einer Mehrzahl von diskreten Material-Schwächungsbereichen oder Perforierungen bewirken. Die Lichtstrahlteilung erfolgt hierbei mit Hilfe eines diffraktiven optischen Elements (DOE), was gleichzeitig eine nahezu beliebige Strahlformung und -bearbeitung ermöglicht, wobei das diffraktive optische Element eine Mehrzahl von diffraktiven optischen Zonen in Entsprechung zu der vorbestimmten Anordnung von Material-Schwächungsbereichen oder Perforierungen aufweist, die eine unterschiedliche Ausbildung von Intensität, Strahlquerschnitt, Form und/oder Divergenz der Teillichtstrahlen bewirken. Somit weist das diffraktive optische Element eine oder mehrere diffraktive optische aktive Zonen auf, die beispielsweise in Gestalt von alternierenden erhabenen und vertieften linien-, kreis- oder ellipsenförmigen Zonen oder von alternierenden Bereichen mit unterschiedlichem Brechungsindex oder in anderer Weise, als geeignet Licht beugende Strukturen ausgebildet sind. Diese aktiven Zonen sind bevorzugt auf einem einzelnen, für den Eingangs-Lichtstrahl transparenten Substrat vorgesehen, das zu diesem Zweck auch wechselbar im Strahlengang des Eingangs-Lichtstrahls gehalten sein kann.

Der Durchmesser des auf den Werkstücken erzeugbaren Laserlichtspots hoher Intensität zur Laserbearbeitung von Werkstücken ist beispielsweise beim Laserkunststoffschweißen mittels einem fasergekoppelten Diodenlaser als Laserquelle durch den Faserkerndurchmesser und das Abbildungssystem egeben und kann mit üblichen optischen Wirkelementen nur bedingt beeinflusst werden. In vielen Fällen ist es jedoch notwendig, eine gegenüber dem Laserlichtspotdurchmesser deutlich breitere Schweißnaht zu schaffen. Will man eine derartige breitere Schweißnaht mit einem kontinuierlichen Konturprozess erzielen, muss man entweder zwei- oder mehrfach die Schweißkontur mit einem seitlich versetzten Laserstrahl abfahren oder das Abbildungssystem derart dejustieren, dass die Fokusebene nicht mit der Wechselwirkungsfläche, z.B. der Oberfläche der Werkstücke zusammenfällt. Bei der Verwendung eines Scanners zur quasisimultanen Übertragung des Laserstrahls auf die Werkstücke ist die Einstellmöglichkeit für die Größe des Laserlichtspots ebenfalls durch den Faserkerndurchmesser, die Kollimationslinse und die Fokussierungslinse, typischerweise eine Planfeldlinse mit bestimmtem Arbeitsfeld, nur wie vorstehend beschrieben möglich. Will man eine breitere Schweißlinie erzielen, muss die Schweißkontur ebenfalls mehrmals zeitlich versetzt zueinander abgefahren werden.

Generell ist die Energieübertragung auf die Werkstücke optimal, wenn die Wechselwirkungsfläche der Werkstücke und die Fokusebene der Laseranordnung zusammenfallen. Dabei weist der Laserlichtspot einen von der Laseranordnung bestimmten Durchmesser höchster Energiedichte auf. Ist die zu erzeugende Schweißnaht bzw. Schweißkontur in der Breite größer als der Durchmesser des durch die Optik gegebene Laserlichtspots so führt dies in jedem Fall zu zusätzlichen Prozesszeiten, die sich auf die Fertigungskosten ungünstig auswirken und daher unerwünscht sind.

Ausgehend von dem vorstehend beschriebenen Stand der Technik liegt der Erfindung die Aufgabe zugrunde, eine Möglichkeit vorzuschlagen, den der Fokusebene zugeordneten optimalen Laserlichtspotdurchmesser auf einen bestimmten gewünschten Wert entsprechend der Breite der herzustellenden Schweißnaht zu vergrößern.

Diese Aufgabe wird erfindungsgemäß durch ein Verfahren mit den Merkmalen des Patentanspruchs 1 sowie eine Laseranordnung mit den Merkmalen des nebengeordneten Patentanspruchs 7 gelöst. Weitere vorteilhafte Ausgestaltungen der Erfindung sind den jeweils rückbezogenen Patentansprüchen zu entnehmen.

Kerngedanke der Erfindung ist es, einen typischerweise von einer Kollimationslinse kollimierten ursprünglichen Laserstrahls mittels einem diffraktiven optischen Element (DOE) in Teillaserstrahlen zu zerlegen und die Teillaserstrahlen zu einem resultierenden Strahlenbündel neu zusammenzusetzen, das einen verbesserten Laserstrahl bildet, der auf die Werkstücke gerichtet ist und auf diese einwirkt. Dabei kann insbesondere die Anzahl der Teillaserstrahlen, deren lateraler Abstand und deren Durchmesser und der Gesamtdurchmesser des Strahlenbündels mittels dem DOE bestimmt werden.

Bei dem erfindungsgemäßen Verfahren zum Einstellen eines Laserlichtspots hoher Intensität zur Laserbearbeitung von Werkstücken, beispielsweise zum Laserkunststoffschweißen von zu verbindenden Werkstücken, wird eine Laseranordnung verwendet, die einen einen Laserstrahl aussendenden Laser und mindestens eine Fokussierungslinse zum Konvergieren des Laserstrahls aufweist sowie ein optisches Wirkelement zur Einstellung des Durchmessers des Strahlenbündels. Erfindungsgemäß ist vorgesehen, dass mittels eines diffraktiven optischen Elements als Wirkelement der Durchmesser des Strahlenbündels und dem daraus folgenden Durchmesser des Laserlichtspots auf den Werkstücken, vorzugsweise in der Fokusebene, quer zu deren Erstreckungsrichtung auf eine gewünschte Dimension durch Zusammensetzen von dem diffraktiven optischen Element generierten Teillaserstrahlen vergrößert wird. Dazu werden die aus dem ursprünglichen Laserstrahl generierten Teillaserstrahlen mit Überlappungen und/oder Lücken beliebiger Form zu einem Gesamtlaserstrahl zusammengesetzt auf die Werkstücke gerichtet, wobei der Gesamtlaserstrahl jeweils an einem einzigen Bearbeitungspunkt wirkt. Dabei wird ein Gesamtdurchmesser des Laserstrahls durch das diffraktive optische Element bestimmt. Eine Vergrößerung des Durchmessers des Laserlichtspots in der Fokusebene bedingt naturgemäß auch eine Vergrößerung des Laserlichtspotdurchmessers mehr oder weniger entfernt von der Fokusebene, d. h. ober- und unterhalb der Fokusebene. Optimal ist es dabei, wenn die Fokusebene und die Wechselwirkungsfläche bei der Laserbearbeitung der Werkstücke mit dem Laserlichtspot hoher Intensität eine gemeinsame Ebene bilden. Natürlich kann das Abbildungssystem der Laseranordnung bezüglich den Werkstücken auch derart in der Entfernung angeordnet sein, dass die Fokusebene der Laseranordnung und die Wechselwirkungsfläche, z. B. die Kontaktfläche der Werkstücke nicht zusammenfallen.

Erfindungsgemäß ist vorgesehen, dass bei dem Verfahren zur Einstellung eines Laserlichtspots hoher Intensität zur Laserbearbeitung von Werkstücken zur Bildung des diffraktiven optischen Elementes eine Einheitszelle repliziert wird und somit eine Anzahl von Einheitszellen nebeneinander mit gleichem, verschiedenem oder ohne Abstand zueinander angeordnet werden, und das diffraktive optische Element austauschbar aufgenommen und ohne genaue laterale Ausrichtung gegenüber dem ursprünglichen Laserstrahl wechselbar in den Strahlengang eingebracht und verwendet wird.

Bei einer Ausführungsform der Erfindung überlappen die von dem diffraktiven optischen Element generierten Teillaserstrahlen sich an ihren Rändern, wobei durch die seitliche Überlagerung ein kontinuierliches Strahlprofil gebildet wird. Das Strahlenbündel, das den resultierenden Laserstrahl bildet, erzeugt an den Werkstücken einen lückenlosen Laserlichtspot zur Bearbeitung der Werkstücke, der insbesondere relativ zu den Werkstücken bewegt wird.

Bei einer anderen Ausführungsform der Erfindung überlappen sich die von dem diffraktiven optischen Element generierten Teillaserstrahlen an ihren Rändern nicht, so dass ein ein- oder zweidimensionales Strahlprofil aus diskreten voneinander beabstandeten Punkten gebildet wird. Der resultierende Laserstrahl erzeugt an den Werkstücken ein punktförmiges Muster, das ebenfalls relativ zu den Werkstücken bewegt wird.

Bei beiden vorstehend beschriebenen Anordnungen der Teillaserstrahlen zueinander wird zur Beaufschlagung der Werkstücke mit elektromagnetischer Energie aus den Teillaserstrahlen ein Gesamtlaserstrahl geformt, der an einem einzelnen Bearbeitungspunkt über den Laserlichtspot wirkt. Der Laserlichtspot kann dabei Überlappungen von Teillaserstrahlen oder von Lücken zwischen den Teillaserstrahlen in beliebiger Form aufweisen. Das damit in den Werkstücken durch Wechselwirkung erzeugbare Temperaturprofil ist in keinem Fall homogen. Jedoch erfolgt physikalisch bedingt durch Wärmeleitung ein Temperaturausgleich zwischen Stellen unterschiedlicher Temperatur des Temperaturprofils an den Werkstücken. Insbesondere wird dabei durch die Wechselwirkung im Material der Werkstücke das punktförmige Muster des Strahlprofils zu einem kontinuierlichen Wirkungsprofil zusammengeführt.

Zusätzlich kann das diffraktive optische Element neben der Generierung der Teillaserstrahlen für einen bestimmten Strahlbündeldurchmesser auch noch die Leistung des ursprünglichen Laserstrahls auf die Teillaserstrahlen, abhängig vom Design des DOEs, gleichmäßig oder unterschiedlich auf die Teillaserstrahlen verteilen. Abhängig von der Anwendung des Verfahrens für unterschiedliche Bearbeitungszwecke von Werkstücken bzw. im Material unterschiedlichen Werkstücken kann gegenüber einem plateauförmigen Strahlprofil ein topfförmiges oder ein andersartig geformtes spezielles Strahlprofil günstiger zur Bearbeitung sein und mit einem speziell ausgebildeten DOE erreicht werden.

Bei einer bevorzugten Ausführungsform des erfindungsgemäßen Verfahrens werden für das resultierende Strahlprofil die vom diffraktiven optischen Element generierten Teillaserstrahlen in Intensität und/oder Leistung gewichtet, so dass für den Laserlichtspot verschiedene resultierende Strahlprofile formbar sind. Die Gewichtung der Leistung der Teilstrahlen erfolgt durch das spezifische Design des DOE. Für unterschiedliche Gewichtungen muss ein komplett neues Design des DOE erarbeitet werden.

Vorzugsweise erfolgt die Gewichtung der Teilstrahlen für ein topfförmiges Strahlprofil, das einen resultierenden Laserlichtspot auf den Werkstücken erzeugt, derart dass die Intensität bzw. Leistung am Rand stärker ist als im Zentrum. Dabei wird die Intensität des Strahlprofils des resultierenden Laserstrahls an von den Koordinaten (X, Y) bestimmten Profilpunkten bezüglich des Zentrums des Laserlichtspottes durch die Funktion

$$I(x,y) = \frac{P}{2\pi b} \frac{1}{\sqrt{b^2 - r^2}}$$

festgelegt, wobei b der Radius, P die Gesamtintensität und r der Abstand des jeweiligen Profilpunktes zum Zentrum des resultierenden Laserstrahls ist. Dabei ergibt sich der Abstand des jeweiligen Profilpunktes als

$$r = \sqrt{x^2 + y^2}$$, wobei r kleiner als b ist.

Das vorgeschlagene erfindungsgemäße Verfahren kann generell in Verbindung mit einem Faserlaser oder einem Diodenlaser angewendet werden. Faserlaser sind eine spezielle Form des Festkörperlasers und weisen gegenüber Diodenlasern eine deutlich bessere Strahlqualität auf. Der aus der Laserapertur austretende Laserstrahl zeichnet sich durch eine äußerst geringe Divergenz aus. Die Energiedichteverteilung des Strahlprofils, d. h. das Gaußprofil der Energiedichte ist um ein Mehrfaches schmäler als beim Diodenlaser gleicher Leistung. Damit eignet sich ein Faserlaser besonders gut zur Laserbearbeitung von Werkstücken.

Unterschiedliche Größen des Laserstrahlenbündels können bei der Erfindung einfach durch unterschiedlich ausgebildete diffraktive optische Elemente erzielt werden. Für die unterschiedliche Einstellung des Strahlenbündels und des daraus resultierenden Laserlichtspots werden vorteilhafterweise austauschbare, verschiedenartig ausgebildete DOEs verwendet, die ohne genaue Ausrichtung gegenüber dem ursprünglichen Laserstrahl eingesetzt werden, insbesondere laterale Ausrichtung quer zu Richtung des Laserstrahls. Um dies zu ermöglichen, werden zur Bildung des diffraktiven optischen Elementes vorzugsweise eine Anzahl von Einheitszellen nebeneinander mit gleichem, verschiedenem oder ohne Abstand zueinander angeordnet. Es ist von Vorteil, wenn das diffraktive optische Element zwischen einer dem Laser nachgeschalteten Kollimationslinse und der Fokussierungslinse der Laseranordnung angeordnet wird. Optimal wird es in einer Distanz vor der Fokussierlinse angeordnet, die der Brennweite dieser Fokussierlinse entspricht. Es ist prinzipiell auch möglich, dass DOE mit geringem Abstand hinter der Fokussierungslinse vorzusehen, solange die dadurch entstehenden Unschärfen in einem für den Anwendungsfall vertretbaren Bereich bleiben.

Bei der erfindungsgemäßen Laseranordnung zur Laserbearbeitung von Werkstücken, die mindestens einen Laserstrahl aussendenden Laser sowie mindestens eine Fokussierungslinse zum Konvergieren des Laserstrahls und ein optisches Wirkelement zur Einstellung des Strahldurchmessers des Laserstrahls aufweist, ist das Wirkelement als diffraktives optisches Element ausgebildet, das den ursprünglichen Laserstrahl in ein Strahlenbündel aus Teillaserstrahlen zerlegt und den Durchmesser des Laserlichtspots vergrößert. Das diffraktive optische Element ist derart konfiguriert, dass ein aus den generierten Teillaserstrahlen zusammengesetztes resultierendes Strahlprofil auf die Fokusebene gerichtet ist. Dabei vergrößert das diffraktive optische Element den Durchmesser des Laserlichtspots auf den Werkstücken, vorzugsweise in der Fokusebene und quer zu der Erstreckungsrichtung der Fokusebene, gegenüber dem Durchmesser des ursprünglichen Laserstrahls beim Eintritt in das diffraktive optische Element auf eine gewünschte Dimension. Erfindungsgemäß sind die Teillaserstrahlen zu einem Gesamtlaserstrahl zusammengesetzt, der Überlappungen der Teillaserstrahlen und/oder Lücken zwischen den Teillaserstrahlen aufweist, die in beliebiger Form ausgebildet sein können. Der Gesamtlaserstrahl ist jeweils auf einen einzigen Bearbeitungspunkt gerichtet, an dem er punktuell wirkt.

Erfindungsgemäß weist das diffraktive optische Element eine Anzahl von Einheitszellen auf, die nebeneinander mit gleichem, verschiedenem oder ohne Abstand zueinander angeordnet sind, wobei der Abstand gleichmäßig oder ungleichmäßig ausgebildet sein kann. Bei der Anzahl von Einheitszellen ist jede Zelle durch die Replikation einer Einheitszelle identisch ausgebildet. Das diffraktive optische Element ist austauschbar aufgenommen und ohne genaue laterale Ausrichtung gegenüber dem ursprünglichen Laserstrahl wechselbar. Durch die Replikation einer Einheitszelle ist die Justierung des DOEs im Strahlengang nicht mehr von Bedeutung.

Bei einer bevorzugten Ausführungsform der erfindungsgemäßen Laseranordnung sind die von dem diffraktiven optischen Element generierten Teillaserstrahlen in Intensität und/oder Leistung derart gewichtet, dass sich für den resultierenden Laserlichtspot ein vom Zentrum zum Rand hin in der Intensität zunehmendes Strahlprofil ergibt. Das diffraktive optische Element ist vorzugsweise zwischen einer dem Laser nachgeschalteten Kollimationslinse und der Fokussierungslinse der Laseranordnung angeordnet. Die Laseranordnung kann in oder an einem Bearbeitungskopf einer Laserkunststoffschweißeinrichtung angeordnet sein, die vorzugsweise eine Scannereinheit mit mindestens einem Ablenkspiegel aufweist. Nachfolgend wird die Erfindung anhand mehrerer in der Zeichnung dargestellten Ausführungsbeispielen näher erläutert. Es zeigen in einer schematischen Darstellung:

Figur 1    eine erste erfindungsgemäße Laseranordnung ohne Scannereinheit;

Figur 2    eine zweite erfindungsgemäße Laseranordnung mit Scannereinheit;

Figur 3    einen Laserlichtspot eines Diodenlasers (Figur 3a) und einen Querschnitt durch das entsprechende Strahlprofil (Figur 3b), ohne vor der Fokussierungslinse angeordnetes DOE;

Figur 4    einen Laserlichtspot eines Diodenlasers (Figur 4a) und einen Querschnitt durch das Strahlprofil (Figur 4b) mit vor der Fokussierungslinse angeordnetem DOE und gleichmäßiger Intensität der seitlich überlappenden Teillaserstrahlen;

Figur 5    einen Laserlichtspot eines Diodenlasers (Figur 5a) und einen Querschnitt durch das Strahlprofil (Figur 5b) mit vor der Fokussierungslinse angeordnetem DOE und zum Rand hin zunehmender Intensität der seitlich überlappenden Teillaserstrahlen;

Figur 6    einen Laserlichtspot eines Diodenlasers (Figur 6a) und einen Querschnitt durch das Strahlprofil (Figur 6b) mit vor der Fokussierungslinse angeordnetem DOE und gleichmäßiger Intensität der seitlich nicht vorüberlappenden Teillaserstrahlen; und

Figur 7    einen Laserlichtspot eines Diodenlasers (Figur 7a) und einen Querschnitt durch das Strahlprofil (Figur 7b) mit vor der Fokussierungslinse angeordnetem DOE und zum Rand hin zunehmender Intensität der seitlich nicht vorüberlappenden Teillaserstrahlen;

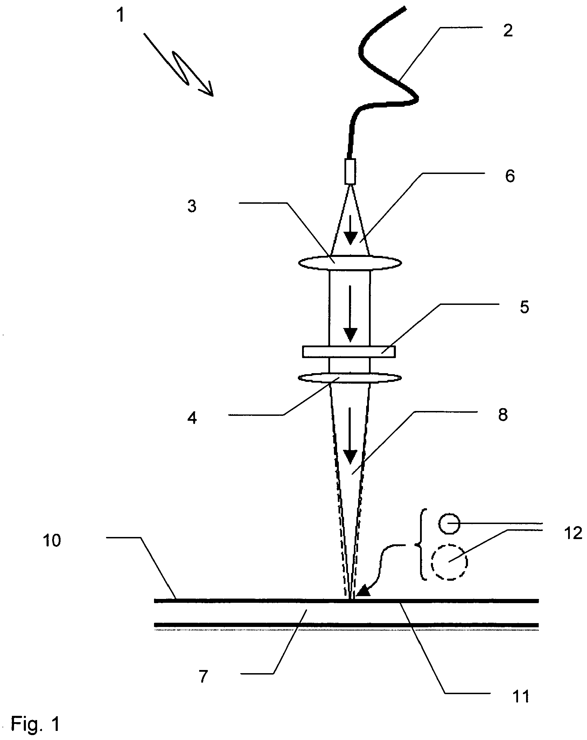

Eine erfindungsgemäße Laseranordnung 1, prinzipiell dargestellt in der Figur 1, umfasst einen in der Zeichnung nicht dargestellten Laser, eine auf den Laser folgende optische Faser 2, eine Kollimationslinse 3 und eine Fokussierungslinse 4 sowie ein diffraktives optisches Element 5 (DOE), das zwischen der Kollimationslinse 3 und der Fokussierungslinse 4 angeordnet ist. Aus der optischen Faser 2 tritt ein ursprünglicher Laserstrahl 6 aus, der durch die Kollimationslinse 3 kollimiert, durch das darauffolgende DOE 5 geformt und mittels der Fokussierungslinse 4 fokussiert auf ein Werkstück 7 als resultierender Laserstrahl 8 gerichtet ist. Der Laserstrahl 8 ist aus in dieser Figur nicht dargestellten Teillaserstrahlen 9 zusammengesetzt, wobei die Fokusebene 10 der Laseranordnung 1 mit der Oberfläche 11 des Werkstück 7 zusammenfällt. Der resultierende Laserstrahl 8 erzeugt auf der Oberfläche 11 des Werkstückes 7 einen Laserlichtspot 12 hoher Intensität zur Laserbearbeitung des Werkstückes 7. Der Durchmesser des Laserlichtspots 12 ist abhängig von der Ausbildung des DOEs 5. Durch unterschiedliche DOEs 5 können im Durchmesser unterschiedliche Laserlichtspots 12 auf dem Werkstück 7 erzeugt werden. Die Figur 1 zeigt zwei größenunterschiedliche Laserlichtspots 12 sowie die zugeordneten Laserstrahlen 8 mit einer durchgezogenen und einer gestrichelten Umfangslinie.

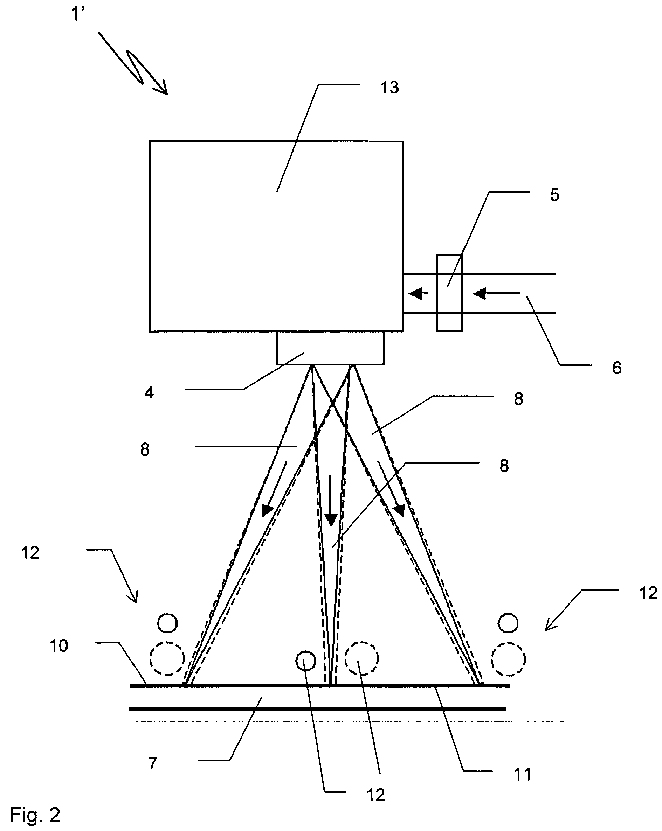

Figur 2 zeigt eine weitere erfindungsgemäße Laseranordnung 1', die sich von der in der Figur 1 abgebildeten Laseranordnung 1 prinzipiell durch eine Scannereinheit 13 unterscheidet, die zwischen dem DOE 5 und der Fokussierungslinse 4 angeordnet ist. Mittels der Scannereinheit 13 kann der resultierende Laserstrahl 8 nach dem DOE 5 ein- oder zweidimensional bezüglich der optischen Achse der Fokussierungslinse 4 abgelenkt werden. Der wandernde Laserstrahl 8 ist in der Figur 2 in drei Stellungen bezüglich dem Werkstück 7 dargestellt. Er erzeugt in jeder beliebigen Stellung innerhalb des möglichen Arbeitsfeld auf der Oberfläche 11 des Werkstückes 7 einen Laserlichtspot 12 entsprechend der Figur 1.

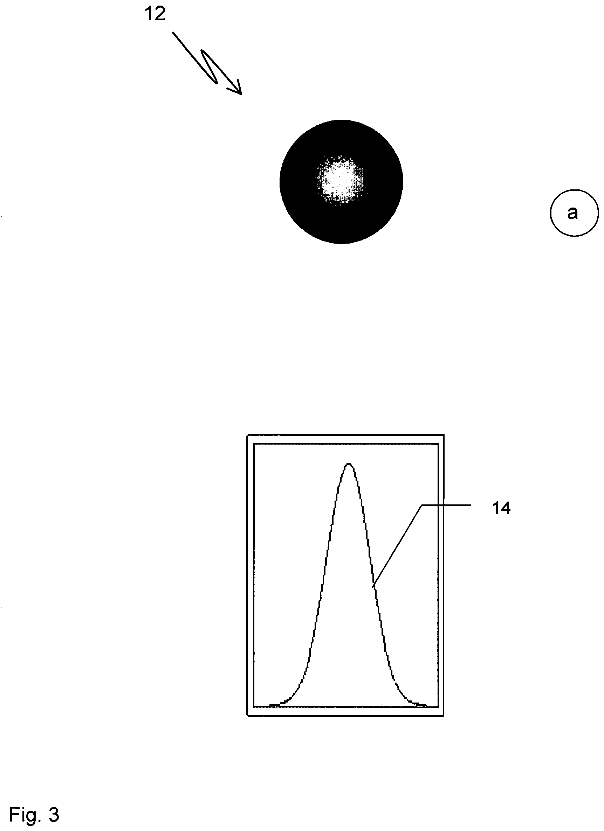

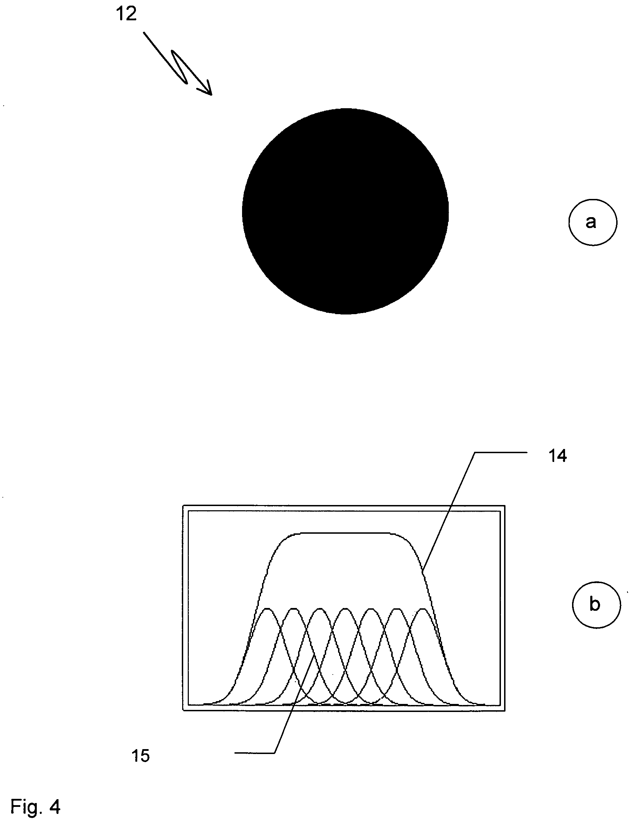

Figur 3 veranschaulicht den Laserlichtspot 12 eines von einem Diodenlaser ausgehenden ursprünglichen Laserstrahls 6 auf einem Werkstück 7 sowie den zugehörigen Querschnitt des Strahlprofils 14. In einfachster Form besteht ein Diodenlaser aus einer Laserdiode, gegebenenfalls mit einer Kollimations- und einer Fokussierungsoptik. Das Strahlprofil 14 gemäß der Figur 3b weist eine typische Gaußform mit einer breiten Glockenkurve auf, das dem in der Figur 3a gezeigten Laserlichtspot 12 entspricht. Die Figur 4 gibt in der Figur 4a einen Laserlichtspot 12 und in der Figur 4b das zugeordnete Strahlprofil 14 wieder, die mittels einem der in den Figuren 1, 2 dargestellten Laseranordnungen 1, 1' erzeugt sind. Aus dem Strahlprofil 14 ist erkennbar, dass das DOE eine Anzahl von Teillaserstrahlen 9 generiert, die sich seitlich überlappen und einen weitgehend homogenen resultierenden Laserstrahl 8 bilden, der wiederum den Laserlichtspot 12 erzeugt. Das Laserstrahlprofil 14 entsteht durch Überlagerung von gaußförmigen Teilstrahlprofilen 15, die eine gleichmäßige Intensitätsverteilung aufweisen. Jedem Teilstrahlprofil 15 ist ein Teillaserstrahl 9 zuordenbar. Da die Teilstrahlprofile 15 seitlich wesentlich überlappen, kann aus der Figur 3b geschlossen werden, dass die Teilstrahlen 9 sich ebenfalls seitlich überlappend zueinander erstrecken. Dabei erfolgt die Gewichtung der Intensität der Teilstrahlen 9 gleichmäßig durch das DOE 5, so dass der Laserlichtspot 12 ein top-hat-förmiges Strahlprofil 14 mit einem ebenen Bereich und steil abfallenden Flanken aufweist. Die aufsummierten Teilstrahlprofile 15 verbessern die nicht optimale Strahlqualität des eingesetzten Diodenlasers wesentlich.

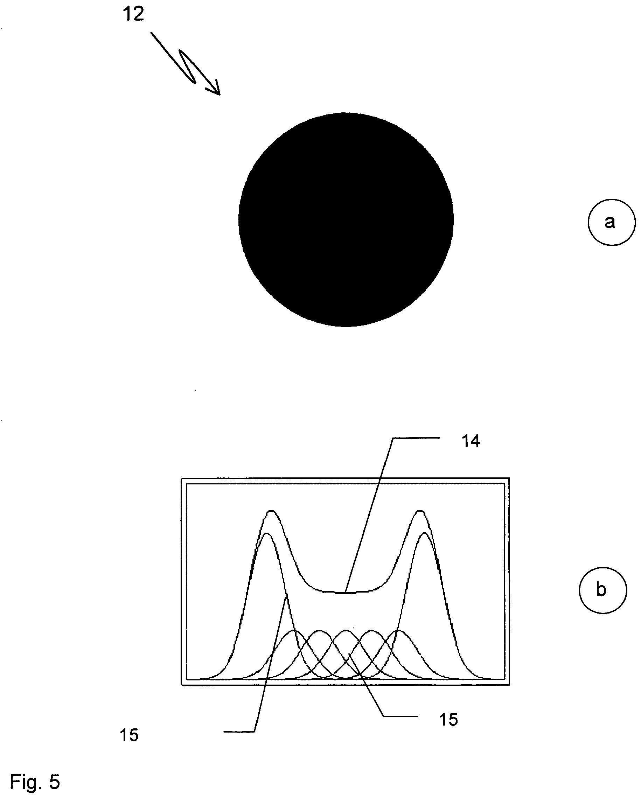

Die Figuren 5a, 5b zeigen einen Laserlichtspot 12 und das entsprechende Strahlprofil 14, das ebenfalls von seitlich überlappenden Teillaserstrahlen 9 gebildet wird. Im Gegensatz zu den der Figur 4 zugeordneten Teillaserstrahlen 9 weisen diese keine identische Intensität auf. Die randnahen Laserteilstrahlen 9 weisen gegenüber den zentrumsnahen Laserteilstrahlen 9 eine höhere Gewichtung bezüglich der Intensität auf. Damit ergibt sich ein topfförmiges Strahlprofil 14, mit einem zentralen ebenen Bereich, daran anschließenden ansteigenden Bereichen und mit außen am Rand steil abfallenden Flanken. Die Teilstrahlprofile 15 sind im zentralen Bereich und im Randbereich des resultierenden Laserstrahls 8 in der Höhe unterschiedlich und werden in gleicher Weise wie bei der Figur 4 beschrieben aufaddiert, wobei sich ein kontinuierliches Strahlprofil 14 ergibt.

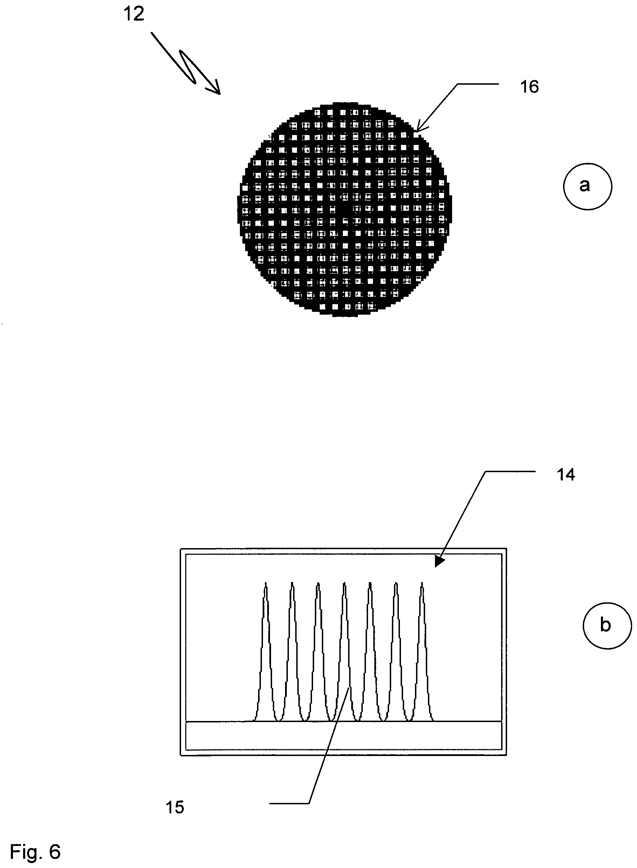

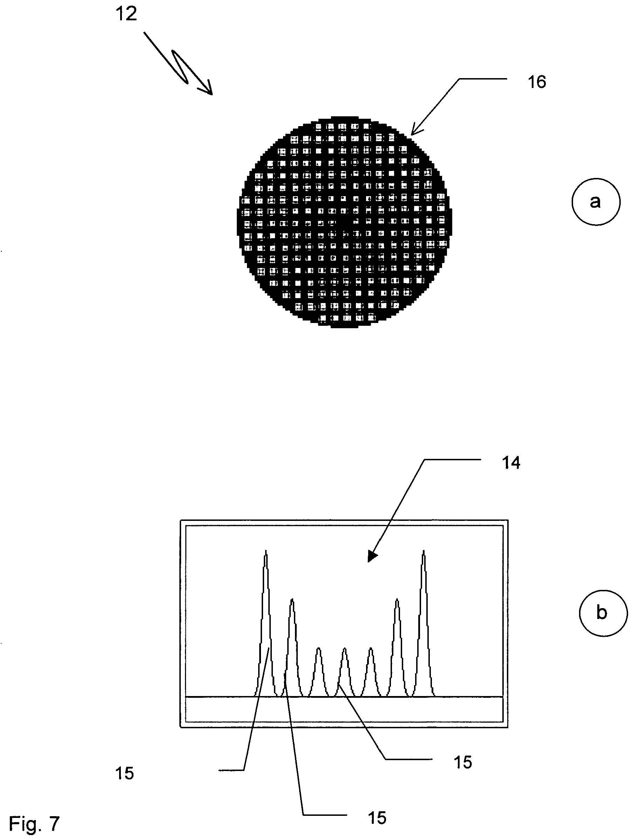

Die Figuren 6, 7 zeigen jeweils einen Laserlichtspot 12 mit einem Strahlprofil 14, das ein zweidimensionales Muster aus von einander beabstandeten diskreten Punkten 16 aufweist. Dabei geht der ursprüngliche Laserstrahl 6 von einem Faserlaser aus, der sich von einem Diodenlaser im Wesentlichen durch eine deutlich bessere Strahlqualität unterscheidet, so dass die damit erzeugten Teillaserstrahlen 9 Teilstrahlprofile 15 geringerer Breite aufweisen, als bei einem ursprünglichen Laserstrahl 6, der von einem Diodenlaser ausgeht. Durch die bessere Konvergenz des Laserstrahls 6 werden voneinander seitlich beabstandete Teillaserstrahlen 9 durch das DOE 5 generiert, die als resultierender Laserstrahl 8 auf dem Werkstück 7 einen lückenbehafteten Laserlichtspot 12 erzeugen, also ein diskontinuierliches Strahlprofil 14. Das ein Punktraster umfassende Strahlprofil 14 kann entsprechend den Figuren 4, 5 top-hat-förmig oder topfförmig nach der Aufsummierung der Teilstrahlprofile 15 sein. Durch Wechselwirkungen im Material der Werkstücke 7 wird das punktförmige Muster vorzugsweise durch Wärmeleitung zu einem kontinuierlichen Wirkungsprofil zusammengeführt, so dass auch hier wiederum eine kontinuierliche und keine Bearbeitung von separaten Punkten der Werkstücke 7 erfolgt. Die Figur 6 zeigt die Überlagerung von separierten Teilstrahlen 9 bei gleichmäßiger Gewichtung dieser Teilstrahlen 9 und die Figur 7 die Überlagerung von separierten Teilstrahlen 9 mit nach außen zunehmender Intensität der Teilstrahlen 9.

## Patentansprüche

1. Verfahren zum Einstellen eines Laserlichtspots (12) hoher Intensität zur Laserbearbeitung von Werkstücken (7), vorzugsweise zum Laserkunststoffschweißen von zu verbindenden Werkstücken, mittels einer Laseranordnung (1, 1'), mit einem mindestens einen Laserstrahl (6) aussendenden Laser und mindestens einer Fokussierungslinse (4) zum Konvergieren des Laserstrahls (6), und mit einem optischen Wirkelement (5) zur Einstellung des Strahldurchmessers des Laserstrahls (6), wobei das optische Wirkelement (5) als diffraktives optisches Element (5) ausgebildet ist, das den ursprünglichen Laserstrahl (6) in ein Strahlenbündel aus Teillaserstrahlen (9) zerlegt, die auf die Werkstücke (7) gerichtet werden, wobei mittels des diffraktiven optischen Elements (5) der Durchmesser des Strahlenbündels aus Teillaserstrahlen (9) und der daraus folgende Durchmesser des Laserlichtspots (12) auf den Werkstücken (7), vorzugsweise in der Fokusebene (10) und quer zu der Erstreckungsrichtung der Fokusebene (10) auf eine gewünschte Dimension vergrößert wird, wobei aus den Teillaserstrahlen (9) ein Gesamtlaserstrahl (8) geformt wird und die von dem diffraktiven optischen Element (5) generierten Teillaserstrahlen (9) sich, abhängig von der Ausbildung des diffraktiven optischen Elements (5), an ihren Rändern entweder überlappen, sodass durch die seitliche Überlagerung ein kontinuierliches Strahlprofil (14) gebildet wird, oder an den Rändern nicht überlappen, sodass ein ein- oder zweidimensionales Strahlprofil (14) aus diskreten voneinander beabstandeten Punkten (16) gebildet wird, und wobei die Anzahl, der laterale Abstand und der Durchmesser der Teillaserstrahlen (9) sowie der Gesamtdurchmesser des Gesamtlaserstrahl (8) durch das diffraktive optische Element (5) bestimmt sind, **dadurch gekennzeichnet, dass** zur Bildung des diffraktiven optischen Elementes (5) eine Einheitszelle repliziert wird und somit eine Anzahl von Einheitszellen nebeneinander mit gleichem, verschiedenem oder ohne Abstand zueinander angeordnet werden, und das diffraktive optische Element (5) austauschbar aufgenommen und ohne genaue laterale Ausrichtung gegenüber dem ursprünglichen Laserstrahl (6) wechselbar in den Strahlengang eingebracht und verwendet wird.

**2.** Verfahren nach Anspruch 1, **dadurch gekennzeichnet, dass** durch Wechselwirkungen im Material der Werkstücke (7) das punktförmige Muster, vorzugsweise durch Wärmeleitung, zu einem kontinuierlichen Wirkungsprofil zusammengeführt wird.

**3.** Verfahren nach einem der Ansprüche 1 oder 2, **dadurch gekennzeichnet, dass** für das resultierende Strahlprofil (14) die vom diffraktiven optischen Element (5) generierten Teillaserstrahlen (9) in Intensität und/oder Leistung gewichtet werden, so dass für den Laserlichtspot (12) verschiedene Strahlprofile (14) formbar sind.

**4.** Verfahren nach Anspruch 3, **dadurch gekennzeichnet, dass** das Strahlprofil (14) des resultierenden Laserstrahls (8), vorzugsweise dessen Intensität an von den Koordinaten (x, y) bezüglich dem Zentrum des Laserlichtspots (12) bestimmten Profilpunkten gemäß der Funktion

$$I(x, y) = \frac{P}{2\pi b} \frac{1}{\sqrt{b^2 - r^2}}$$

festgelegt wird, wobei b der Radius, P die Gesamtintensität und r der Abstand des jeweiligen Profilpunktes zum Zentrum des resultierenden Laserstrahls (8) ist.

**5.** Verfahren nach einem der vorstehenden Ansprüche, **dadurch gekennzeichnet, dass** für die unterschiedliche Einstellung des Laserlichtspots (12) verschiedenartig ausgebildete diffraktive optische Elemente (5) verwendet werden.

**6.** Verfahren nach einem der vorstehenden Ansprüche, **dadurch gekennzeichnet, dass** das diffraktive optische Element (5) zwischen einer dem Laser nachgeschalteten Kollimationslinse (3) und der Fokussierungslinse (4) angeordnet wird.

**7.** Laseranordnung (1, 1') zur Laserbearbeitung von Werkstücken (7), vorzugsweise zum Laserkunststoffschweißen von zu verbindenden Werkstücken, mit mindestens einem, mindestens einen Laserstrahl (6) aussendenden Laser, mindestens einer Fokussierungslinse (4) zum Konvergieren des Laserstrahls (6) und einem optischen Wirkelement (5) zur Einstellung des Strahldurchmessers des Laserstrahl (6), wobei die Fokussierungslinse (4) einen Laserlichtspot (12) hoher Intensität auf den Werkstücken (7) erzeugt und das Wirkelement (5) als diffraktives optisches Element (5) ausgebildet ist, das den ursprünglichen Laserstrahl (6) in ein Strahlenbündel aus Teillaserstrahlen (9) zerlegt, und wobei die vom diffraktiven optischen Element (5) generierten Teillaserstrahlen (9) zusammengesetzt ein resultierendes Strahlprofil (14) bilden, das auf die Fokusebene (10) gerichtet ist, wobei das diffraktive optische Element (5) den Durchmesser des Strahlenbündels aus Teillaserstrahlen (9) und den daraus folgenden Durchmesser des Laserlichtspots (12) auf den Werkstücken (7), in der Fokusebene (10) und quer zu der Erstreckungsrichtung der Fokusebene (10) auf eine gewünschte Dimension vergrößert, wobei die aus dem ursprünglichen Laserstrahl (6) generierten Teillaserstrahlen (9) mit Überlappungen oder mit Lücken beliebiger Form auf die Werkstücke (7) gerichtet und zu einem Gesamtlaserstrahl (8) zusammengesetzt sind, wobei die Anzahl, der laterale Abstand und der Durchmesser der Teillaserstrahlen (9) sowie der Gesamtdurchmesser des Gesamtlaserstrahl (8) durch das diffraktive optische Element (5) bestimmt sind, **dadurch gekennzeichnet, dass** das diffraktive optische Element (5) durch eine Replikation einer Einheitszelle eine Anzahl von Einheitszellen aufweist, die nebeneinander mit gleichem, verschiedenem oder ohne Abstand zueinander angeordnet sind, und das diffraktive optische Element (5) austauschbar aufgenommen und ohne genaue laterale Ausrichtung gegenüber dem ursprünglichen Laserstrahl (6) wechselbar ist.

**8.** Laseranordnung nach Anspruch 7, **dadurch gekennzeichnet, dass** für das resultierende Strahlprofil (14) die vom diffraktiven optischen Element (5) generierten Teillaserstrahlen (9) in Intensität und/oder Leistung derart gewichtet sind, dass sich für den Laserlichtspot (12) ein vom Zentrum zum Rand hin zunehmendes Strahlprofil (14) ergibt.

**9.** Laseranordnung nach Anspruch 7 oder 8, **dadurch gekennzeichnet, dass** das diffraktive optische Element (5) zwischen einer dem Laser nachgeschalteten Kollimationslinse (3) und der Fokussierungslinse (4) angeordnet ist.

**10.** Laseranordnung nach einem der vorstehenden Ansprüche 7 bis 9, **dadurch gekennzeichnet, dass** die Laseranordnung (1, 1') in oder an einem Bearbeitungskopf einer Laserkunststoffschweißeinrichtung angeordnet ist, die vorzugsweise eine Scannereinheit (13) mit mindestens einem Ablenkspiegel aufweist.

## Claims

**1.** Method for adjusting a laser light spot (12) of high intensity for laser machining of workpieces (7), preferably for laser plastics welding of workpieces to be connected, by means of a laser arrangement (1, 1'), comprising a laser that emits at least one laser beam (6) and at least one focusing lens (4) for converging the laser beam (6), and comprising an optical active element (5) for adjusting the beam diameter of the laser beam (6), the optical active element (5) being designed as a diffractive optical element (5) that splits the original laser beam (6) into a bundle of partial laser beams (9) which are directed onto the workpieces (7), the diameter of the bundle of partial laser beams (9) and the resulting diameter of the laser light spot (12) on the workpieces (7) being increased, preferably in the focal place (10) and transversely with respect to the direction of extension of the focal plane (10), to a desired dimension by means of the diffractive optical element (5), a total laser beam (8) being formed from the partial laser beams (9), and the partial laser beams (9) generated by the diffractive optical element (5), irrespective of the design of the diffractive optical element (5), either overlapping at the edges thereof such that a continuous beam profile (14) is formed by the lateral superposition or not overlapping at the edges such that a one- or two-dimensional beam profile (14) is formed from mutually spaced discrete points (16), and the number, lateral spacing and diameter of the partial laser beams (9) and the total diameter of the total laser beam (8) being determined by the diffractive optical element (5), **characterised in that** a unit cell is replicated in order to form the diffractive optical element (5) and therefore a number of unit cells are arranged next to one another so as to have the same, different or no spacing, and the diffractive optical element (5) is interchangeably received and introduced and used in the beam path such that it can be replaced without precise lateral orientation with respect to the original laser beam (6).

2. Method according to claim 1, **characterised in that**, as a result of interactions in the material of the workpieces (7), the punctiform pattern is brought together, preferably by thermal conduction, to form a continuous active profile.

3. Method according to either claim 1 or claim 2, **characterised in that** the partial laser beams (9) generated by the diffractive optical element (5) are weighted in intensity and/or power for the resulting beam profile (14) such that different beam profiles (14) can be formed for the laser light spot (12).

4. Method according to claim 3, **characterised in that** the beam profile (14) of the resulting laser beam (8), preferably the intensity thereof at profile points determined by the coordinates (x, y) with respect to the centre of the laser light spot (12), is established according to the function

$$I(x, y) = \frac{P}{2\pi b} \frac{1}{\sqrt{b^2 - r^2}}$$

where b is the radius, P is the total intensity and r is the distance of the relevant profile point from the centre of the resulting laser beam (8).

5. Method according to any of the preceding claims, **characterised in that** differently designed diffractive optical elements (5) are used for variously adjusting the laser light spot (12).

6. Method according to any of the preceding claims, **characterised in that** the diffractive optical element (5) is arranged between a collimating lens (3) arranged downstream of the laser and the focusing lens (4).

7. Laser arrangement (1, 1') for laser machining of workpieces (7), preferably for laser plastics welding of workpieces to be connected, comprising at least one laser that emits at least one laser beam (6), at least one focusing lens (4) for converging the laser beam (6), and an optical active element (5) for adjusting the beam diameter of the laser beam (6), the focusing lens (4) generating a laser light spot (12) of high intensity on the workpieces (7) and the optical active element (5) being designed as a diffractive optical element (5) that splits the original laser beam (6) into a bundle of partial laser beams (9), and the partial laser beams (9) generated by the diffractive optical element (5) forming, when brought together, a resulting beam profile (14) that is directed onto the focal plane (10), the diffractive optical element (5) increasing the diameter of the bundle of partial laser beams (9) and the resulting diameter of the laser light spot (12) on the workpieces (7), in the focal place (10) and transversely with respect to the direction of extension of the focal plane (10), to a desired dimension, the partial laser beams (9) generated from the original laser beam (6) being directed onto the workpieces (7) so as to have overlaps or gaps of any shape and being brought together to form a total laser beam (8), the number, lateral spacing and diameter of the partial laser beams (9) and the total diameter of the total laser beam (8) being determined by the diffractive optical element (5), **characterised in that** the diffractive optical element (5), as a result of replicating a unit cell, has a number of unit cells which are arranged next to one another so as to have the same, different or no spacing, and the diffractive optical element (5) is interchangeably received and can be replaced without precise lateral orientation with respect to the original laser beam (6).

8. Laser arrangement according to claim 7, **characterised in that** the partial laser beams (9) generated by the diffractive optical element (5) are weighted in intensity and/or power for the resulting beam profile (14) such that a beam profile (14) that increases from the centre towards the edge is produced for the laser light spot (12).

9. Laser arrangement according to either claim 7 or claim 8, **characterised in that** the diffractive optical element (5) is arranged between a collimating lens (3) arranged downstream of the laser and the focusing lens (4).

10. Laser arrangement according to any of the preceding claims 7 to 9, **characterised in that** the laser arrangement (1, 1') is arranged in or on a machining head of a laser plastics welding device which preferably has a scanner unit (13) comprising at least one deflection mirror.

## Revendications

1. Procédé de réglage d'un spot de lumière laser (12) de haute intensité pour l'usinage au laser de pièces (7), de préférence pour le soudage au laser de matières plastiques de pièces à assembler, au moyen d'un dispositif laser (1, 1') comportant un laser émettant au moins un faisceau laser (6) et au moins une lentille de focalisation (4) pour faire converger le faisceau laser (6), et comportant un élément optique actif (5) pour régler le diamètre de faisceau du faisceau laser (6), dans lequel l'élément optique actif (5) est réalisé sous la forme d'un élément optique diffractif (5) qui décompose le faisceau laser d'origine (6) en un faisceau de faisceaux laser partiels (9) qui sont dirigés sur les pièces (7), dans lequel le diamètre du faisceau de faisceaux laser partiels (9) et le diamètre résultant du spot de lumière laser (12) sur les pièces (7), de préférence dans le plan focal (10) et transversalement à la direction d'extension du plan focal (10), est augmenté à une dimension souhaitée au moyen de l'élément optique diffractif (5), dans lequel un faisceau laser total (8) est formé à partir des faisceaux laser partiels (9) et, en fonction de la configuration de l'élément optique diffractif (5), les faisceaux laser partiels (9) générés par l'élément optique diffractif (5) soit se chevauchent à leurs bords, de sorte qu'un profil de faisceau continu (14) est formé par la superposition latérale, soit ne se chevauchent pas aux bords, de sorte qu'un profil de faisceau (14) uni- ou bidimensionnel composé de points discrets (16) espacés les uns des autres est formé, et dans lequel le nombre, la distance latérale et le diamètre des faisceaux laser partiels (9) ainsi que le diamètre total du faisceau laser total (8) sont déterminés par l'élément optique diffractif (5), **caractérisé en ce que** pour former l'élément optique diffractif (5), une cellule unitaire est répliquée et ainsi un certain nombre de cellules unitaires sont disposées côte à côte à la même distance, à une distance différente ou sans distance entre elles, et l'élément optique diffractif (5) est reçu de manière interchangeable et est inséré et utilisé dans le trajet du faisceau de manière à pouvoir être échangé sans alignement latéral précis par rapport au faisceau laser d'origine (6).

2. Procédé selon la revendication 1, **caractérisé en ce que**, par des interactions dans le matériau des pièces (7), le motif en forme de points est réuni, de préférence par conduction thermique, pour former un profil d'action continu.

3. Procédé selon l'une des revendications 1 ou 2, **caractérisé en ce que**, pour le profil de faisceau résultant (14), les faisceaux laser partiels (9) générés par l'élément optique diffractif (5) sont pondérés en intensité et/ou en puissance, de sorte que différents profils de faisceau (14) peuvent être formés pour le spot de lumière laser (12).

4. Procédé selon la revendication 3, **caractérisé en ce que** le profil de faisceau (14) du faisceau laser résultant (8), de préférence son intensité à des points de profil déterminés par les coordonnées (x, y) par rapport au centre du spot de lumière laser (12), est défini selon la fonction

$$I(x,y) = \frac{P}{2\pi b} \frac{1}{\sqrt{b^2 - r^2}}$$

dans laquelle b est le rayon, P l'intensité totale et r la distance du point de profil respectif au centre du faisceau laser résultant (8).

5. Procédé selon l'une des revendications précédentes, **caractérisé en ce que** des éléments optiques diffractifs (5) de configuration différente sont utilisés pour le réglage différent du spot de lumière laser (12).

6. Procédé selon l'une des revendications précédentes, **caractérisé en ce que** l'élément optique diffractif (5) est disposé entre une lentille de collimation (3) placée en aval du laser et la lentille de focalisation (4).

7. Dispositif laser (1, 1') pour l'usinage au laser de pièces (7), de préférence pour le soudage au laser de matières plastiques de pièces à assembler, comportant au moins un laser émettant au moins un faisceau laser (6), au moins une lentille de focalisation (4) pour faire converger le faisceau laser (6) et un élément optique actif (5) pour régler le diamètre de faisceau du faisceau laser (6), dans lequel la lentille de focalisation (4) produit un spot de lumière laser (12) de haute intensité sur les pièces (7) et l'élément actif (5) est réalisé sous la forme d'un élément optique diffractif (5) qui décompose le faisceau laser d'origine (6) en un faisceau de faisceaux laser partiels (9), et dans lequel les faisceaux laser partiels (9) générés par l'élément optique diffractif (5) forment ensemble un profil de faisceau résultant (14) qui est dirigé sur le plan focal (10), dans lequel l'élément optique diffractif (5) augmente le diamètre du faisceau de faisceaux laser partiels (9) et le diamètre résultant du spot de lumière laser (12) sur les pièces (7) dans le plan focal (10) et transversalement à la direction d'extension du plan focal (10) à une dimension souhaitée, dans lequel les faisceaux laser partiels (9) générés à partir du faisceau laser d'origine (6) sont dirigés avec des chevauchements ou avec des lacunes de forme quelconque sur les pièces (7) et réunis pour former un faisceau laser total (8), dans lequel le nombre, la distance latérale et le diamètre des faisceaux laser partiels (9) ainsi que le diamètre total du faisceau laser total (8) sont déterminés par l'élément optique diffractif (5), **caractérisé en ce que** l'élément optique diffractif (5) présente, par réplication d'une cellule unitaire, un certain nombre de cellules unitaires qui sont disposées côte à côte à la même distance, à une distance différente ou sans distance entre elles, et l'élément optique diffractif (5) est reçu de manière interchangeable et peut être échangé sans alignement latéral précis par rapport au faisceau laser d'origine (6).

8. Dispositif laser selon la revendication 7, **caractérisé en ce que**, pour le profil de faisceau résultant (14), les faisceaux laser partiels (9) générés par l'élément optique diffractif (5) sont pondérés en intensité et/ou en puissance de telle sorte qu'il en résulte pour le spot de lumière laser (12) un profil de faisceau (14) croissant du centre vers le bord.

9. Dispositif laser selon la revendication 7 ou 8, **caractérisé en ce que** l'élément optique diffractif (5) est disposé entre une lentille de collimation (3) placée en aval du laser et la lentille de focalisation (4).

10. Dispositif laser selon l'une des revendications précédentes 7 à 9, **caractérisé en ce que** le dispositif laser (1, 1') est disposé dans ou sur une tête d'usinage d'un dispositif de soudage au laser de matières plastiques qui présente de préférence une unité de balayage (13) dotée d'au moins un miroir de déviation.

Fig. 1

Fig. 2

12

a

14

Fig. 3

Fig. 4

Fig. 5

12

16

a

14

b

15

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003098295 A1
- US 7009138 B2
- EP 1449610 A1
- EP 1524096 A3
- EP 0184290 A1
- WO 2009045320 A
- DE 102007037133 A1